# EUROPEAN PATENT APPLICATION

(11) **EP 2 894 425 A1**
(43) Date of publication of application: **15.07.2015**
(21) Application number: 14150407.6
(22) Date of filing: 08.01.2014
(51) Int. Cl.: F26B 3/10, F26B 3/12, F26B 17/10, C01B 33/18

(54) **Method for comminuting and dehydrating wet-process synthetic amorphous silica**

(71) Applicant: Svenska Aerogel AB, 803 09 Gävle (SE)
(72) Inventor: Norberg, Peter, 806 43 Gävle (SE); Lantz, Jan, 826 50 Söderhamn (SE)
(74) Representative: Eurenius, Karin Lisa Maria

(57) **Abstract**

A method for comminuting and dehydrating synthetic amorphous silica (SAS), in which a comminuter/dehydrator apparatus including a cyclone device is used to comminute and dehydrate SAS starting with wet solids. The method comprises the steps of providing the apparatus, causing gas to cyclonically flow through the apparatus, introducing material in the form of synthetic amorphous silica into said apparatus and dehydrating and comminuting said material, adjusting dampening means (17) of the apparatus such that a major part of the comminuted and dehydrated material flows with the gas through an adjustable outlet (54) at the upper end of a sleeve (15), and collecting the comminuted and dehydrated material using collecting means (102).

## Description

### Field of the invention

The present invention relates to a method for comminuting and dehydrating wet-process synthetic amorphous silica (SAS) starting with wet solids that could be anything from lumpy masses of filter cake or similar pastes to dilute slurries typically containing 2-10% of dry matter. The wet solids may be produced by the sol-gel technique or by precipitation processes.

### Background

Spray dryers are widely used in the silica industry to convert liquid feedstocks of SAS into dry powders. A spray dryer typically consist of a drying chamber containing a nozzle or rotating wheel that atomises the incoming liquid into a distribution of very fine droplets. These droplets are quickly dried as they meet a stream of hot drying air. After drying, the powder obtained is ground to smaller particles and classified in different size distributions.

Like most other dryers, spray dryers consume large quantities of energy, predominantly in the form of natural gas, but also oil, and when available steam, in order to heat up the drying air. The temperature of the drying air is rarely below 150°C and may be as high as 650°C. This means that the use of low-grade energy (e.g. water at 35-100°C) is not feasible without costly up-grading and heat recovery. A recent survey has concluded that the average specific energy consumption for industrial spray dryers in the UK was 1.35 kWh/kg of evaporated water (Baker & McKenzie, Drying Technology, 23: 365-386, 2005). The variation of the specific energy consumption is large, particularly among small dryers with evaporation rates less than 1 t/h. According to the same survey such small dryers can show up to 4 times higher specific energy consumption or around 5 kWh/kg of evaporated water.

Apparatuses and methods for comminuting and dehydrating materials such as grains, metal scrap, waste products, foods, etc, are disclosed in US 5,236,132 and US 5,598,979. The apparatuses comprise a cylindrical chamber and a body with an inverted conical cavity suspended below the chamber. They further comprise air flow means for causing air to cyclonically flow through the apparatus and controlling means for controlling the rate of comminuting material and the coarseness of the comminuted material. The controlling means are in the form of a sleeve and dampening means located in the upper part of the sleeve. Material to be dried and powdered is introduced into the apparatus and after processing, comminuted and dehydrated material is gravitationally discharged from an opening in the bottom part of the conical cavity. Humid air flows through an outlet provided in the upper part of the apparatus. In the apparatus disclosed in US 5,598,979, the air flows through a dust collection unit in order to reduce emissions in the form of dust from the apparatus.

### Summary of the invention

An object of the present invention is to provide an, in at least some aspect, improved method of converting wet synthetic amorphous silica solids into dry powders. In particular, it is an object to provide such a method, which is more energy efficient than conventional spray drying techniques.

This object is achieved by a method for comminuting and dehydrating synthetic amorphous silica according to claim 1. The method comprises the steps of:
a) providing an apparatus comprising:
   (i) a cylindrical chamber with a vertical or essentially vertical longitudinal axis,
   (ii) a body with an inverted conically shaped cavity with a vertical or essentially vertical axis, the body being connected to, and suspended below, a base of the cylindrical chamber at a base of said conically shaped cavity, the diameters of the said bases being equal or essentially equal,
   (iii) gas flow means for causing gas to flow through said apparatus,
   (iv) material introducing means for introducing material into the apparatus,
   (v) controlling means including a cylindrically shaped sleeve axially extending through said cylindrical chamber and partially through said conically shaped cavity, said controlling means further including dampening means located at the upper end of and at least partially within said sleeve, wherein the relative position of the dampening means with respect to the sleeve is adjustable such that an adjustable outlet for gas and comminuted and dehydrated material is provided at the upper end of the sleeve,
   (vi) collecting means for collecting the comminuted and dehydrated material, said collecting means being provided downstream of the adjustable outlet,
b) causing gas from said gas flow means to cyclonically flow through said chamber and said cavity,
c) introducing material in the form of synthetic amorphous silica into said apparatus and dehydrating and comminuting said material,
d) adjusting the size of the adjustable outlet by means of said controlling means such that a major part of the comminuted and dehydrated material flows with the gas through the adjustable outlet at the upper end of the sleeve,
e) collecting the comminuted and dehydrated material in said collecting means.

The method thus makes use of a comminuter/dehydrator apparatus such as initially described. However, in the method according to the present invention, comminuted and dehydrated material follows the gas flow through the outlet provided at the top of the apparatus instead of being gravitationally discharged from the bottom of the apparatus. This is achieved by adjusting the size of the adjustable outlet by means of the controlling means such that a major part of the comminuted and dehydrated material flows with the gas through the outlet at the upper end of the sleeve.

The method according to the invention significantly reduces the energy needed for drying and powdering SAS in comparison with conventional spray drying techniques. Using the inventive method, it is not necessary to dilute and dissolve SAS paste in a liquification step in order to make a slurry that is suitable for spray drying. This means less water to be evaporated to reach the final dry matter content of the material and thereby reduced specific energy consumption. The specific energy consumption here refers to the energy consumed by the gas flow means per kilogram of evaporated water. By adjusting the processing parameters, the inventive method can accommodate virtually any condition of the feedstock, from liquid to solid. Furthermore, the inventive method comminutes and dehydrates the SAS in one step, such that the step of grinding the powder after drying can be done with less input of energy or even be omitted.

In one embodiment of the invention, the size of the adjustable outlet is adjusted such that at least 90 % of the comminuted and dehydrated material is discharged through the outlet at the upper end of the sleeve, preferably at least 95 %. This generally reduces the specific energy consumption. It is possible to feed the remaining material, which is discharged below the conically shaped cavity, back to the material introducing means and thereby further increase the dry matter content.

In a preferred embodiment of the invention, the size of the adjustable outlet is adjusted such that all of the comminuted and dehydrated material is discharged through the outlet at the upper end of the sleeve. The specific energy consumption can thus be further reduced.

In one embodiment of the invention, the method comprises a step of preheating gas for use in step (b). By using preheated gas, preferably preheated air, it is possible to reduce the specific energy consumption even more. The energy used to preheat the air is here not included in the specific energy consumption.

In one embodiment of the invention, the gas is preheated to a temperature of ≤ 150°C, preferably ≤ 100°C. Since it is possible to use low-grade energy for preheating the gas to these temperatures, waste heat from for example industrial processes may be used. Such waste heat is frequently available at a low cost and it is therefore advantageous to make use of the energy in the inventive method and thereby reduce the specific energy consumption.

In one embodiment of the invention, a filter arrangement is used as the collecting means. Such a filter arrangement may be for example a bank of bag filters. This is a simple and efficient way of collecting the comminuted and dehydrated SAS.

In one embodiment of the invention, at least one cyclone device is used as the collecting means in combination with a filter arrangement. This facilitates the cleaning of the filter arrangement, since a large amount of the dehydrated and comminuted material is gravitationally discharged from at least one cyclone. Preferable, a set of multiple series cyclones is used, in which case the comminuted and dehydrated SAS may be directly sorted with regard to size and classified in size distributions.

### Brief description of the drawings

The present invention will now be described in detail with reference to the attached drawings, wherein:
- Fig. 1: shows an apparatus used in the inventive method in a fragmentary side elevation view, with portions cut away to reveal details;
- Fig. 2: is a diagram showing specific energy consumption versus feed rate into the apparatus;
- Fig. 3: is a diagram showing specific energy consumption versus inlet air temperature;
- Fig. 4: is a diagram showing specific energy consumption versus damper setting;
- Fig. 5: is a diagram showing dry matter content of powder retrieved versus feed rate into the apparatus,
- Fig. 6: is a diagram showing dry matter content of powder retrieved versus inlet air temperature;
- Fig. 7: is a diagram showing dry matter content of powder retrieved versus damper setting; and
- Fig. 8: is a diagram showing dry matter content of powder retrieved versus specific energy consumption.

### Detailed description of embodiments of the invention

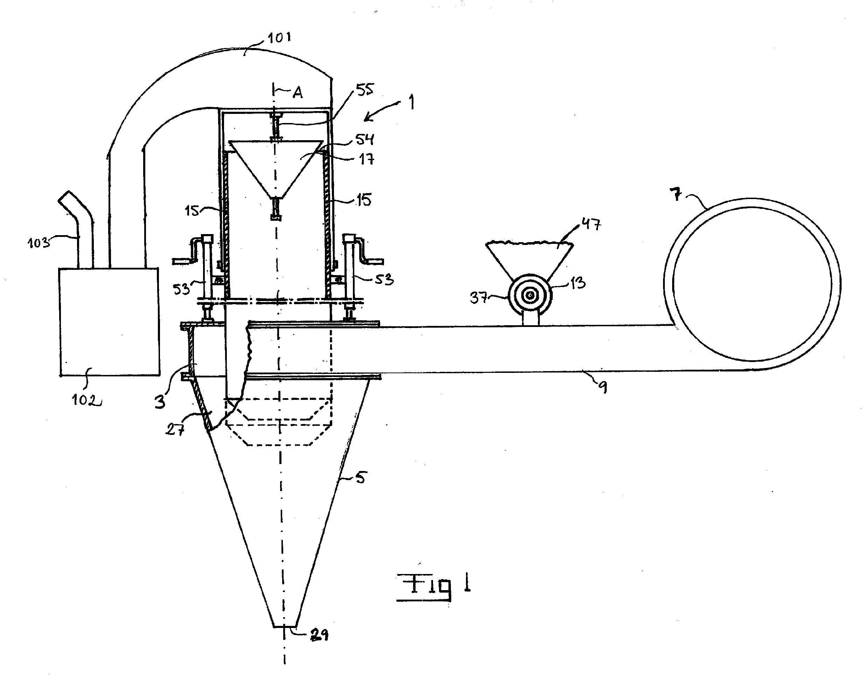

Figure 1 shows an apparatus 1 used in the method according to the invention. The apparatus 1 comprises a cylindrical chamber 3 with an essentially vertical longitudinal axis A. At a base of the cylinder 3, a body 5 with an inverted conically shaped cavity 27 with an essentially vertical axis A is connected to the chamber 3 in a suspended relationship at a base of the conical cavity 27. The base of the cavity is the topmost portion of the cavity 27. The diameter of the base of the cavity 27 is essentially equal to the diameter of the base of the cylindrical chamber 3. The apparatus 1 further comprises gas flow means for causing gas, in this case air, to flow through said apparatus 1. The gas flow means comprises a blower 7 for pressurising the air, ducting means 9 and a venture mechanism (not shown) to enhance the air velocity. The apparatus 1 also comprises material introducing means 13, here including a valve 37 and a hopper 47, for introducing material into the apparatus 1, and controlling means for controlling on one hand the rate of comminuting the material and the coarseness of the comminuted material, and on the other hand where the dehydrated and comminuted material is discharged. The controlling means include a cylindrically shaped sleeve 15 which extends axially through the cylindrical chamber 3 and partially through the conically shaped cavity 27. The vertical position of the sleeve 15 relative to the chamber 3 and the cavity 27 can be adjusted using elevating means, here shown in the form of a pair of jacks 53. Of course it is also possible to have other elevating means, such as hydraulic elevating means. The controlling means also comprises dampening means in the form of a damper 17, here shaped as an inverted cone, located at the upper end of and partially within said sleeve 15. By means of the damper 17, an adjustable outlet 54 for gas and comminuted and dehydrated material is provided at the upper end of the sleeve 15. The damper 17 is here threadably mounted on a vertical rod 55 such that it is vertically movable toward and away from the sleeve 15 by screwing. Thereby, the size of the outlet 54 can be adjusted. Downstream of the adjustable outlet 54, the apparatus 1 comprises guiding means in the form of a pipe 101 and collecting means in the form of a bag filter bank 102 for collecting the comminuted and dehydrated material. An outlet pipe 103 for humid air is provided downstream the bag filter bank 102. At the bottom of the inverted conically shaped cavity 27, the body 5 comprises an opening 29 for gravitational discharge of comminuted and dehydrated material. A more detailed description of features of the apparatus and the comminuting and dehydration mechanisms is given in US 5,236,132. US 5,598,979 discloses a different embodiment of the apparatus useful for carrying out the inventive method.

In one embodiment of the inventive method, air is blown through the apparatus 1 by means of the blower 7, through the ducting means 9, and is further accelerated by the venture mechanism and introduced into the cylindrical chamber 3. In the chamber 3 and in the conically shaped cavity 27, the air is cyclonically pressurised such that a pressure gradient arises in the cavity 27, with a pressure which is significantly higher at the peripheries of the cavity 27 than near the axis A. When material in the form of wet solid synthetic amorphous silica (SAS) is introduced using the material introduction means 13, the material follows the air flow into the cylindrical chamber 3 and the cavity 27, where it is dehydrated and comminuted as a result of the pressure gradient and the forces within the apparatus 1. By adjusting the position of the sleeve 15, the combined volume of the chamber and the cavity is altered and thereby also the coarseness of the comminuted material. The dashed lines in Figure 1 shows different positions of the sleeve, of which the lowest position results in finer particles.

The damper 17 is in the shown apparatus (1) adjusted relative to the sleeve 15 by screwing. In the method according to the invention, the outlet 29 provided between the sleeve 15 and the damper 17 is sufficiently large to allow a major part of the comminuted material to follow the air flow through the outlet 54. Thus, only a minor part of the comminuted material is discharged through the opening 29 in the lower end of the body 5. Preferably, the damper 17 is adjusted such that no material at all is discharged at the lower end of the body 5, but such that all material follows the air flow through the outlet 54 at the upper end of the sleeve 15. The material is thereafter guided with the air flow through the pipe 101 and collected in the bag filter bank 102.

### Example 1

A rinsed and dewatered silica paste containing 14.7% of solid matter of (Ca,Mg)SiO₃ , the rest being water, was fed into the apparatus 1 at an ambient temperature of 1.3°C. By action of the blower 7, the temperature of the inlet air rose from ambient to about 19°C due to the friction between fan wings of the blower 7 and the air. Material was sampled at the opening 29 in the lower end of the body 5 as well as in the bag filter bank 102 downstream the outlet 54. These samples were denoted TT-UK and TT-F, respectively. For comparison also a sample from the original paste, denoted PS-UU, was taken before drying. The particle size distribution (PSD) of the samples was determined using a Mastersizer 2000 from Malvern Instruments Ltd. in the UK. Spray dried powder from the same type of paste as above was produced in a Mini Spray Dryer B-290 from Büchi Labortechnik AG in Switzerland and was used as a reference material, denoted REF. Table 1 shows the particle size data of precipitated silica samples at different stages of drying extracted from these tests.

**Table 1**

| Sample ID | d(0.1) µm | d(0.5) µm | d(0.9) µm | Condition, sampling position |
|---|---|---|---|---|
| TT-UK | 4.12 | 9.76 | 21.0 | Gravitationally discharged material from the lower end of the apparatus |
| TT-F | 3.12 | 6.80 | 17.8 | From the bag filter |
| PS-UU | 9.35 | 29.4 | 84.6 | Paste sampled before drying |
| REF | 6.16 | 19.5 | 56.8 | Spray dried reference material |

From the results in Table 1 it is clearly seen that the comminuting effect of the apparatus 1 is significant, both for material sampled from the bag filter bank 102 and for material sampled from the opening 29 under the body 5. The shift from larger to smaller particles is seen for the whole distribution by employing the apparatus 1 instead of spray drying. In addition, the PSD of the powder is shifted towards smaller sizes when the finished powder is discharged in the bag filter bank 102 rather than under the lower end of the body 5. In this way, time and energy consuming work needed after drying to grind the powder into a larger share of fines is significantly reduced.

### Example 2

A rinsed and dewatered silica paste containing 14.7% of solid matter of (Ca,Mg)SiO₃ , the rest being water, was fed into the apparatus 1 at an ambient temperature of 1.3°C. By action of the blower 7, the temperature of the inlet air rose from ambient to about 19°C due to the friction between the fan wings and the air. Material was sampled at the opening 29 in the lower end of the body 5 as well as in the bag filter bank 102 downstream the outlet 54. These samples were denoted TT-UK and TT-F, respectively. For comparison also a sample from the original paste, denoted PS-UU, was taken before drying. Spray dried powder from the same type of paste as above was produced in a Mini Spray Dryer B-290 from Büchi Labortechnik AG in Switzerland and was used as a reference material, denoted REF.

The samples were weighed before and after drying in a hot air oven at 105°C until a stable dry weight had been attained. The dry matter content was determined as the percentage of the weight of the dry matter to the total weight of the sample before drying. These results are presented in Table 2.

**Table 2**

| Sample ID | Dry matter content, % | Condition, sampling position |
|---|---|---|
| TT-UK | 76.8 | From the lower end of the cone where discharge normally takes place |
| TT-F | 94.4 | From the bag filter |
| PS-UU | 14.7 | Paste sampled before drying |
| REF | 87.7 | Spray dried reference material |

From the results in Table 2, it is clearly seen that the dehydrating action of the present invention is distinctly more efficient when the finished powder is discharged in the bag filter bank 102 rather than under the lower end of the body 5. In addition, the dry matter content of the material collected in the bag filter bank 102 was higher than the corresponding material processed by the spray dryer.

### Example 3

A rinsed and dewatered silica paste containing 14.7% of solid matter of (Ca,Mg)SiO₃ , the rest being water, was fed into the apparatus 1 at an ambient temperature of 1.3°C. By action of the blower 7, the temperature of the inlet air rose from ambient to about 19°C due to the friction between the fan wings and the air. Material was sampled at the opening in the lower end of the body 5 as well as in the bag filter bank 102 downstream the outlet 54. These samples were denoted TT-UK and TT-F, respectively. For comparison also a sample from the original paste, denoted PS-UU, was taken before drying. Spray dried powder from the same type of paste as above was produced in a Mini Spray Dryer B-290 from Büchi Labortechnik AG in Switzerland and was used as a reference material, denoted REF.

The tapped density of the samples was determined with a jolting volumeter type STAV II from J. Engelsmann AG in Germany. These results are presented in Table 3.

**Table 3**

| Sample ID | Tapped density, g/cm³ | Condition, sampling position |
|---|---|---|
| TT-UK | 0.32 | From the lower end of the cone where discharge normally takes place |
| TT-F | 0.19 | From the bag filter |
| REF | 0.27 | Spray dried reference material |

From the results in Table 3, it is clearly seen that the comminuting and dehydrating action of the apparatus 1 produces a powder with lower density when discharged in the bag filter bank 102 rather than under the lower end of the body 5. The results in Table 3 also suggest that the drying action according to the invention is very gentle and produces a much more open structure resulting in lower tapped density.

### Example 4

A rinsed and dewatered silica paste containing 14.3% of solid matter of essentially synthetic amorphous SiO₂, the rest being water, was fed into the apparatus at air temperatures of 15, 40 and 90°C, respectively. The feed rate of the silica paste varied between 230 and 415 kg/h. By adjusting the relative position of the damper 17, the degree of airflow restriction through the outlet 54 could be varied accordingly. A higher value for the damper setting in mm means that the adjustable outlet 54 is larger, which means less restriction of the airflow. Thus, less material was discharged at the lower end of the body 5 for the higher values of the damper setting. The damper setting was such that at 25 mm some material, less than 10%, was discharged under the lower end of the body 5 but most of the powder would end up in the bag filter bank 102. Damper settings of 75 mm and 120 mm resulted in 100 % of the product ending up in the bag filter bank 102. After drying under conditions as in example 2, the powder collected in the bag filter bank 102 was analysed for its dry matter content. Table 4 shows test results relating feed rate, inlet air temperature and damper setting to the specific energy consumption with regard to the amount of water evaporated and the resulting dry matter content of the powder retrieved in the bag filter bank 102.

**Table 4**

| Test | Feed rate, kg/h | Inlet air temperature, °C | Damper setting, mm | Energy consumption, kWh/kg | Dry matter content, % |
|---|---|---|---|---|---|
| 1 | 230 | 15 | 25 | 1.83 | 94.8 |
| 2 | 415 | 15 | 25 | 1.89 | 95 |
| 3 | 230 | 15 | 120 | 0.93 | 92.3 |
| 4 | 415 | 15 | 120 | 0.84 | 94.3 |
| 5 | 325 | 40 | 75 | 0.64 | 95.1 |
| 6 | 325 | 40 | 75 | 0.65 | 96.5 |
| 7 | 325 | 40 | 75 | 0.65 | 95.5 |
| 8 | 230 | 90 | 25 | 0.74 | 97.4 |
| 9 | 415 | 90 | 25 | 0.52 | 96.5 |
| 10 | 230 | 90 | 120 | 0.72 | 97 |
| 11 | 415 | 90 | 120 | 0.44 | 96.6 |

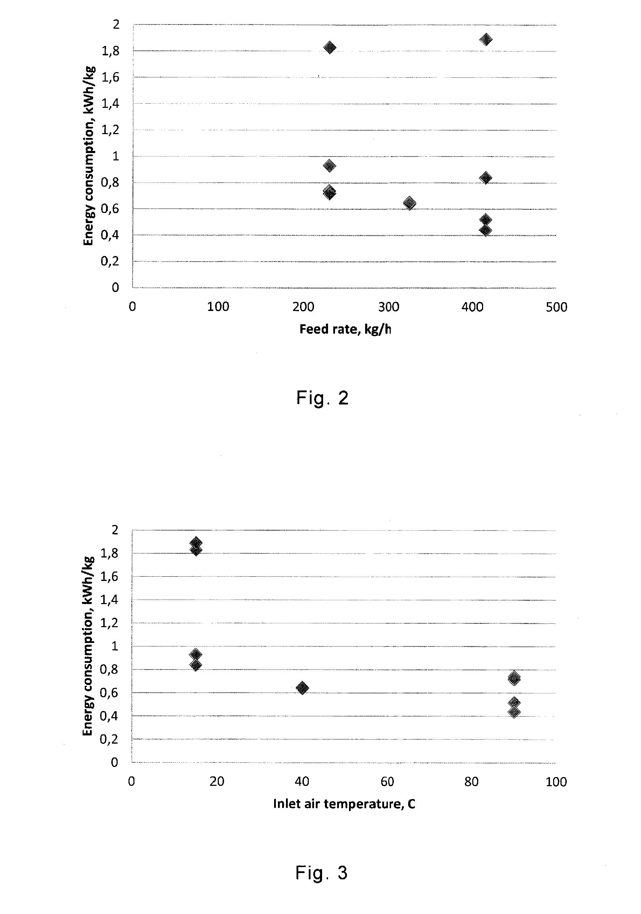

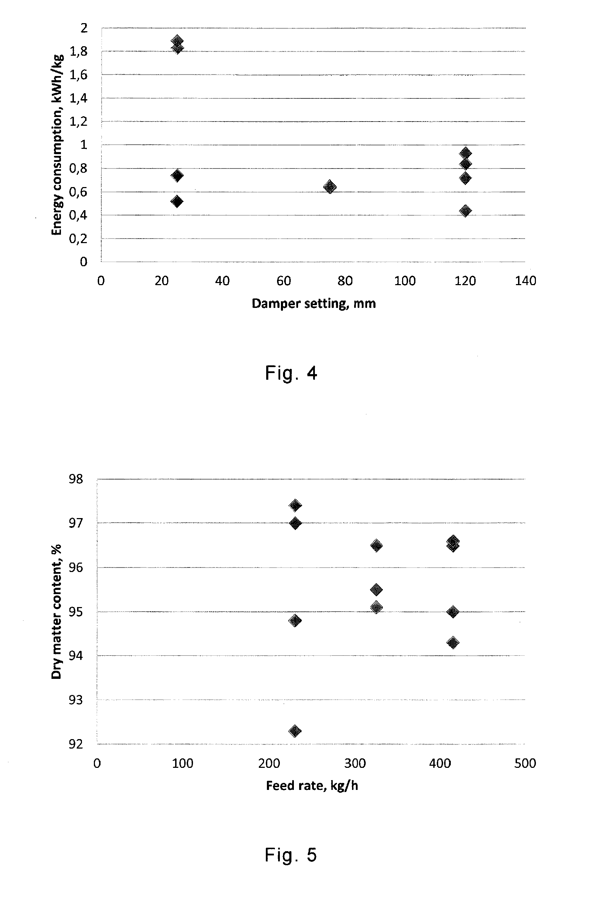

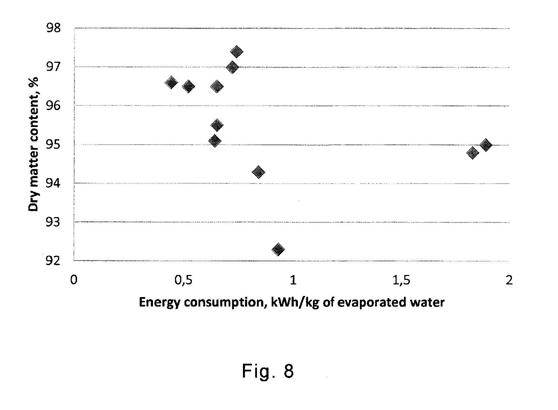

From Table 4 a series of graphs have been plotted which are shown in Figures 2-8 below. These figures are comparing two variables at a time even though they depend on other factors as well. However, when viewed together in a context these factors are clearly distinguishable. Figures 2-4 show the dependent variable specific energy consumption versus the feed rate, the inlet temperature and the damper setting, respectively. Similarly, Figures 5-7 show the dry matter content versus the same independent variables. Finally, Figure 8 shows the dry matter content versus the specific energy consumption.

Figure 2 shows that the specific energy consumption is significantly lower than 1 kWh/kg of evaporated water in all tests with two exceptions, as will be discussed below. Figure 3 shows the benefit of using a higher than ambient temperature for the inlet air. Again a kind of anomaly appears at the ambient temperature where two of the tests show significantly higher values for the specific energy consumption than the other tests. Figure 4 shows that if the damper setting is low, i.e. 25 mm, meaning a more restricted airflow through the apparatus 1, two of the tests gave the high specific energy consumption of about 1.8 kWh/kg of evaporated water while the other two tests showed values lower than 1 kWh/kg. The combined results of Figures 2-4 show that in order to get a low specific energy consumption, either the damper 17 should be set to a high value, in this case 75 or 120 mm, or the inlet air should be preheated to a temperature of 40°C or 90°C. The combination of a high setting of the damper 17 and preheating of the inlet air to above ambient temperature is also feasible.

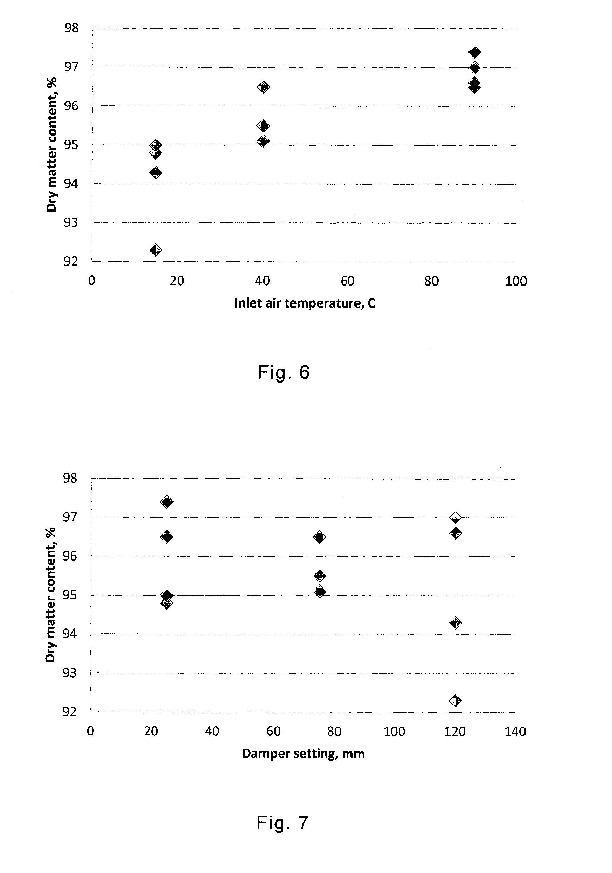

Figure 5 shows that the dry matter content of the powder, as collected in the bag filter bank 102, is not obviously depending on the feed rate. However, for all tests the dry matter content of the powder was 92% or higher. Figure 6 shows the beneficial effect of preheating the inlet air to above ambient temperature in order to obtain consistent high dry matter contents. The higher temperature of the preheated air the higher dry matter content was obtained. Figure 7 shows that all tests resulted in high dry matter contents for all settings of the damper but without any distinct dependence of this variable.

Figure 8 summarises the most important findings of this invention, namely, that in order to obtain a high dry matter content, i.e. > 95%, and at the same time a comparatively low specific energy consumption, i.e. < 1 kWh/kg of evaporated water, preheating of the inlet air to a temperature above that of the ambient air is necessary. If a lower dry matter content is acceptable, e.g. 90%, but still with the requirement that the specific energy consumption should be < 1 kWh/kg, then preheating can be omitted as long as the damper setting is high, i.e. set to allow all of the material to be conveyed by the airflow through the apparatus 1 and finally to the collecting bag filter bank 102.

The invention is not limited to the embodiments disclosed but may be varied and modified within the scope of the following claims. For example, the design of the apparatus may vary such that a relative adjustment of the controlling means is be achieved in other ways than in the shown apparatus 1. The sleeve may for example be hydraulically displaced in relation to the dampening means, or the dampening means may be hydraulically displaced with relation to the sleeve. It is the relative positions of the dampening means and the sleeve which are important in order to control the amount of material discharged below the conically shaped cavity and downstream the outlet at the upper end of the sleeve, respectively.

## Claims

1. A method for comminuting and dehydrating synthetic amorphous silica, the method comprising the steps of:
a) providing an apparatus (1) comprising:
(i) a cylindrical chamber (3) with a vertical or essentially vertical longitudinal axis (A),
(ii) a body (5) with an inverted conically shaped cavity (27) with a vertical or essentially vertical axis (A), the body (5) being connected to, and suspended below, a base of the cylindrical chamber (3) at a base of said conically shaped cavity (27), the diameters of the said bases being equal or essentially equal,
(iii) gas flow means (7) for causing gas to flow through said apparatus (1),
(iv) material introducing means for introducing material into the apparatus (1),
(v) controlling means including a cylindrically shaped sleeve (15) axially extending through said cylindrical chamber (3) and partially through said conically shaped cavity (27), said controlling means further including dampening means (17) located at the upper end of and at least partially within said sleeve (15), wherein the relative position of the dampening means (17) with respect to the sleeve (15) is adjustable such that an adjustable outlet (54) for gas and comminuted and dehydrated material is provided at the upper end of the sleeve (15),
(vi) collecting means (102) for collecting the comminuted and dehydrated material, said collecting means (102) being provided downstream of the adjustable outlet (54),
b) causing gas from said gas flow means (7) to cyclonically flow through said chamber (3) and said cavity (27),
c) introducing material in the form of synthetic amorphous silica into said apparatus (1) and dehydrating and comminuting said material,
d) adjusting the size of the adjustable outlet (54) by means of said controlling means such that a major part of the comminuted and dehydrated material flows with the gas through the adjustable outlet (54) at the upper end of the sleeve (15),
e) collecting the comminuted and dehydrated material in said collecting means (102).

2. The method according to claim 1, wherein in step (d), the size of the adjustable outlet (54) is adjusted such that at least 90 % of the comminuted and dehydrated material is discharged through the adjustable outlet (54) at the upper end of the sleeve (15), preferably at least 95 %.

3. The method according to claim 1, wherein in step (d), the size of the adjustable outlet (54) is adjusted such that all of the comminuted and dehydrated material is discharged through the adjustable outlet (54) at the upper end of the sleeve (15).

4. The method according to any of the preceding claims, wherein the method comprises a step of preheating gas for use in step (b).

5. The method according to claim 4, wherein the gas is preheated to a temperature of ≤ 150°C, preferably ≤ 100°C.

6. The method according to any of the preceding claims, wherein a filter arrangement (102) is used as the collecting means (102).

7. The method according to any of the preceding claims, wherein at least one cyclone device is used as the collecting means in combination with a filter arrangement.
